# EUROPÄISCHE PATENTANMELDUNG

(11) **EP 1 529 567 A2**
(43) Veröffentlichungstag der Anmeldung: **11.05.2005**
(21) Anmeldenummer: 04024263.8
(22) Anmeldetag: 12.10.2004
(51) Int. Cl.: B01L 3/00

(54) **Probenträger mit einer Reaktionskammer**

(30) Priorität: 07.11.2003 DE 10351943
(71) Anmelder: Herbener, Heinz-Gerd, 52249 Eschweiler (DE); Latza, Reinhard, Dr. med., 66386 St. Ingbert (DE); Borowsky, Richard, Dipl.-Kfm., 52249 Eschweiler (DE); Backes, Herbert, 53424 Remagen (DE)
(72) Erfinder: Backes, Herbert, 53424 Remagen (DE)
(74) Vertreter: Patentanwaltskanzlei Liermann-Castell

(57) **Zusammenfassung**

Die Erfindung betrifft einen Probenträger mit einer Reaktionskammer. Bei bekannten Probenträgem handelt es sich um kleine Kunststoffchips, in die Reaktionskammern und Be- und Entlüftungskanäle integriert sind. Derartige Probenträger dienen für mikrobiologische Untersuchungen von Probenflüssigkeiten sowie für die medizinische und Umwelt-Analytik und - Diagnostik. Der vorliegenden Erfindung liegt die Aufgabe zu Grunde, derartige Probenträger weiter zu entwickeln.

Dies wird dadurch erreicht, dass die Reaktionskammer einen spiegelnden Boden aufweist. Dies kann den Umgang mit bildgebenden Verfahren erleichtem.

## Beschreibung

Die Erfindung betrifft einen Probenträger mit einer Reaktionskammer. Derartige Probenträger sind beispielsweise aus der WO 99/46045 bekannt. Die dort beschriebenen Probenträger sind kleine Kunststoffchips, in die Reaktionskammern und Be- und Entlüftungskanäle integriert sind. Derartige Probenträger dienen für mikrobiologische Untersuchungen von Probenflüssigkeiten sowie für die medizinische und Umwelt-Analytik und - Diagnostik.

Der vorliegenden Erfindung liegt die Aufgabe zu Grunde, derartige Probenträger weiter zu entwickeln.

Die Böden, die die unterste Ebene eines derartigen Probenträgers bilden, können aus Glas, Kunststoff oder anderen Materialien hergestellt sein. Vorteilhaft ist es, wenn die Reaktionskammer einen spiegelnden Boden aufweist. Dies kann den Umgang mit bildgebenden Verfahren erleichtern.

Für bestimmte Anwendungen ist es auch vorteilhaft, wenn die Reaktionskammer einen durchsichtigen Boden aufweist, der von einem zumindest für bestimmte Wellenlängen undurchsichtigen Rahmen umgeben ist. Bei der Anordnung mehrerer Reaktionskammern nebeneinander ist der Boden wie eine Lochblende aufgebaut, bei der die Löcher jeweils den Boden einer Reaktionskammer bilden. Zwischen den Reaktionskammern ist der Boden oder eine darüber liegende Ebene vorzugsweise schwarz ausgebildet.

Vorteilhaft ist es, wenn der Probenträger einen zur Reaktionskammer führenden Flüssigkeitskanal aufweist und die an dem Flüssigkeitskanal angrenzenden Seitenwände der Reaktionskammer einen spitzen Winkel bilden. Der spitze Winkel im Bereich des Flüssigkeitskanals erhöht die Kapillarkräfte und erleichtert somit den Zufluss einer Flüssigkeit zur Reaktionskammer.

Eine vorteilhafte Ausgestaltung sieht vor, dass die an den Flüssigkeitskanal angrenzenden Wände der Reaktionskammer - vorzugsweise vom Boden der Reaktionskammer beabstandet - vorstehende Elemente aufweisen, die einen von den Wänden gebildeten Kanal einschnüren. Dies ist auch bei einer runden Reaktionskammer möglich.

Während die an den Boden angrenzenden Seitenwände einer Reaktionskammer zunächst mit dem Boden einen rechten Winkel bilden, erstrecken sich im Bereich der spitzwinklig zueinander stehenden Seitenwände in einem Abstand von beispielsweise 100 µm vom Boden entfernt vorstehende Elemente, die mit den spitzwinklig zueinanderstehenden Wänden zunächst einen offenen Kanal bilden.

Vorteilhaft ist es, wenn sich diese vorstehenden Elemente vom Boden der Reaktionskammer beabstandet berühren und einen geschlossenen Kanal bilden. Beispielsweise kann der Kanal auf der Höhe von etwa 1,5 mm offen sein und darüber auf einer Höhe von 1,5 mm geschlossen sein.

Vorteilhaft ist es, wenn die übrigen Wände in abgerundeten Ecken aufeinander stoßen, um hier die Kapillarkräfte gering zu halten.

Kumulativ oder alternativ ist vorgesehen, dass die Reaktionskammer Wände aufweist, die eine Zickzackstruktur aufweisen, deren Kanten sich senkrecht erstrecken. Die hierdurch entstehenden senkrechten Kanäle an den Wandungen der Reaktionskammer vergrößern die Oberfläche und erleichtern das Aufsteigen der Probe an den Wänden der Reaktionskammer. Die vergrößerte Oberfläche der Reaktionskammerwände führt zu einer schnelleren und dadurch schonenden Verdunstung von Feuchtigkeit der Reaktionsmedien.

Es hat sich als vorteilhaft herausgestellt, dass die Zickzackstruktur sich nur über einen Teil der Höhe der Seitenwände erstrecken sollte. Ab einer bestimmten Höhe vom Boden beabstandet erhalten die Wände somit wieder eine glatte Struktur.

Es hat sich herausgestellt, dass bei beidseitig eines Zulaufkanals zur Reaktionskammer angeordneten Reaktionskammern bei einer Verstopfung alle folgenden Reaktionskammern nicht mehr versorgt werden können.

Als einfache Verbesserung dieser Situation schlägt die Erfindung vor, dass der Probenträger weitere Reaktionskammern, einen Zulaufkanal und vom Zulaufkanal zu den Reaktionskammern führende Verteilerkanäle aufweist, wobei der Zulaufkanal mindestens eine Längsteilung aufweist oder jede Reaktionskammer einen eigenen Zulaufkanal aufweist.

Die Längsteilung führt dazu, dass bei einer Verstopfung auf einer Seite der Längsteilung nur auf dieser Seite die weitere Versorgung, der hier an den Zulaufkanal angebundenen Reaktionskammern beeinträchtigt ist, während auf der, der Längsteilung gegenüberliegenden Seite die Versorgung der Reaktionskammern unbehindert durchgeführt wird. Das Einführen der Längsteilung sorgt somit auf einfache Art und Weise für eine Reduzierung des Schadens, der durch Verstopfungen in der Zulaufleitung entstehen könnte.

Dieser Gedankengang ist auch auf den Entlüftungskanal anzuwenden, und es wird daher vorgeschlagen, dass der Probenträger weitere Reaktionskammern, einen Entlüftungskanal und von den Reaktionskammern zum Entlüftungskanal führende Entlüftungsleitungen aufweist, wobei der Entlüftungskanal mindestens eine Längsteilung aufweist oder jede Reaktionskammer einen eigenen Entlüftungskanal aufweist.

Wenn beispielsweise Flüssigkeit in den Entlüftungskanal eintritt und die Entlüftung behindert, hat dies in der Regel keine Auswirkungen auf die der Längsteilung gegenüberliegend angeordneten Reaktionskammern, die ebenfalls mit dem Entlüftungskanal in Verbindung stehen.

Versuche haben gezeigt, dass es vorteilhaft ist, wenn die Reaktionskammer einen Deckel mit Löchern aufweist. Derartige Löcher haben beispielsweise einen Durchmesser von 1 µm und der Deckel kann dadurch beispielsweise bis zu 1 % der Oberfläche Löcher aufweisen. Die Lochung liegt dann beispielsweise bei 1.000 bis 5.000 Löcher pro mm². Die Löcher können rund, viereckig oder beispielsweise auch schlitzförmig ausgebildet sein. Als Deckel dient beispielsweise eine Folie. Der Deckel kann die gesamte Entlüftung der Reaktionskammer bewirken.

Vorteilhaft ist es, wenn der Deckel eine von der Reaktionskammer weg weisende hydrophobe Oberfläche aufweist. Dies behindert die Benetzung des Deckels mit Flüssigkeit, die den Gasdurchfluss durch den Deckel behindern könnte.

Insbesondere, wenn der Boden der Reaktionskammer durchsichtig ist, ist es von Vorteil, wenn der Deckel eine zur Reaktionskammer weisende verspiegelte Oberfläche aufweist. Auch eine gelochte Deckelfläche kann eine derartige verspiegelte Oberfläche aufweisen, um von der Probenträgerunterseite die Probe mit bildgebenden Verfahren zu untersuchen.

Um Benetzungen mit Feuchtigkeit oder Reaktionsflüssigkeit zu vermeiden, wird vorgeschlagen, dass obere Bereiche senkrechter Wandungen, insbesondere von Entlüftungskanälen oder Kammern, hydrophob ausgebildet sind. Dies erleichtert die Luftzirkulation in Kammern und Kanälen mit häufig kleinem Querschnitt, insbesondere zum Entlüftungskanal.

Je nach Verwendung des Probenträgers, insbesondere bei längeren Inkubationszeiten wie sie bei zellulären Essays häufig erforderlich sind, ist es notwendig, in der Reaktionskammer eine geringe oder eine höhere Luftfeuchtigkeit einzustellen, um ein Eintrocknen oder Trocknungsvorgänge zu vermeiden oder zu verzögern. Um dies zu erleichtern wird vorgeschlagen, dass mindestens eine Reaktionskammer und ein Gasraum in einem Chip integriert sind und miteinander in Verbindung stehen. Dies ermöglicht es, die Reaktionskammer mit im Gasraum definiert voreingestelltem Gas in Verbindung zu bringen.

Hierbei ist es vorteilhaft, wenn der Gasraum hydrophobe Wände aufweist und je nach Anwendungsfall ist vorgesehen, dass der Gasraum Wasser oder ein Gas enthält.

Um eine Versorgung mit einem definierten Gas wie beispielsweise befeuchteter Luft gezielt vorzunehmen, wir vorgeschlagen, dass ein Gasraum mit einer Gaszufuhr in Verbindung steht.

Vorteilhaft ist es darüber hinaus, wenn im Chip ein Luftzirkulationsweg integriert ist, der durch mindestens eine Reaktionskammer und vorzugsweise mindestens einen Gasraum führt. Dieser Luftzirkulationsweg kann mit einem beliebigen Gas beaufschlagt werden, das der Temperierung, Befeuchtung oder Trocknung dient und auch Reaktionen in der Reaktionskammer unterstützten kann.

Letztlich ist vorteilhafter Weise vorgesehen, dass der Probenträger Kanäle aufweist, die sich vorzugsweise mehrmals nacheinander verzweigen, wobei der Kanalquerschnitt sich entsprechend der Verzweigung reduziert.

Ähnlich den sich auf einer Blattfläche verzweigenden Adern können sich im Chip des Probenträgers die Kanäle auch stetig verengend als Zufuhr zum Reaktionsraum oder sich stetig erweiternd als Abfuhr vom Reaktionsraum erstrecken, wodurch der Querschnitt der Kanäle genau an das zu leitende Gas- oder Flüssigkeitsvolumen angepasst werden kann.

Je nach Anwendungsfall können insbesondere in den Entlüftungsleitungen auch spiralartige Kanalstrukturen vorgesehen werden.

Der erfindungsgemäße Probenträger wird vorteilhafter Weise in mehreren Schichten hergestellt. Jede Schicht wird mit einer Maske hergestellt. Die folgenden Figuren zeigen den Aufbau eines Chips als Ausführungsbeispiel, wobei die Struktur des Chips in Form der für den Aufbau verwendeten Masken dargestellt ist.

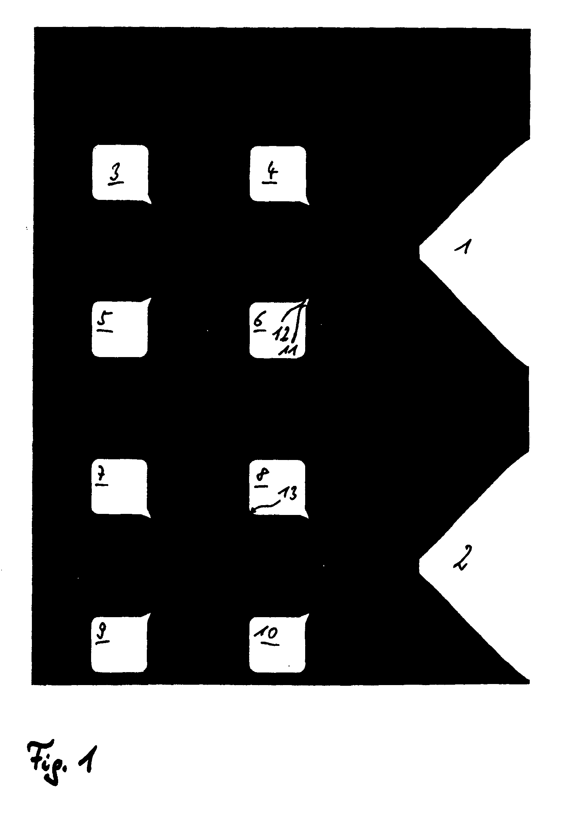

Die Maske 1 bildet nur die äußere Form des Chips ab und weist keine weiteren Strukturen auf. Mit ihr wird ein 200 µm dicker Boden erstellt, auf dem mit der in Figur 1 dargestellten Maske 2 weitergearbeitet wird.

Die über der Grundfläche angeordnete Schicht wird durch die Maske 2 erstellt. Die Maske 2 zeigt auf der rechten Seite die Zuläufe 1 und 2 zu einem noch nicht zu erkennenden Zulaufkanal. Die Reaktionskammerböden 3 bis 10 zeigen bereits die spitzwinklig zueinander stehenden Wände 11, 12 (nur exemplarisch beziffert) und die Abrundungen 13 (nur exemplarisch beziffert) in den Bereichen, in denen die übrigen Wände aneinander stoßen.

Die Figur 2 zeigt die in der Maske 3 vorsehbaren Strukturen. Die gezeigten Einschnürrungen 14 und 15 beginnen in vertikaler Richtung etwa 100 µm vom Boden entfernt. Sie bilden somit senkrechte stabförmige Elemente, die geringfügig vom Boden entfernt beginnen.

Die Figur 3 zeigt die darüber liegende Ebene, die mit der Maske 4 hergestellt wird. Hier ist bereits eine spezielle kleeblattförmige Ausbildung 16 (nur exemplarisch beziffert) zu sehen, die in einer höheren Ebene die Verbindung zwischen Entlüftungskanal und Entlüftungsleitungen bildet. Außerdem sind im Bereich der spitzwinklig zueinander angeordneten Seitenwände die Einschnürungen 14, 15 (nur exemplarisch beziffert) zu erkennen, die im unteren Bereich des Bildes zusammen mit den spitzwinklig zueinanderstehenden Seitenwänden einen offenen senkrechten Kanal und im oberen Bereich des Bildes einen geschlossenen senkrechten Kanal begrenzen. Hierfür ist im oberen Bereich des Bildes eine Kanalabdeckung 17 ausgebildet.

Die Figur 4 zeigt die Maske 5, die zur Herstellung der darüber liegenden Schicht dient. Hier sind bereits zusätzlich die Zulaufkanäle 18 und 19 und ein Entlüftungskanal 20 zu erkennen. Sowohl die Zulaufkanäle 18 und 19 als auch der Entlüftungskanal 20 weisen eine Längsteilung 21, 22 bzw. 23 auf.

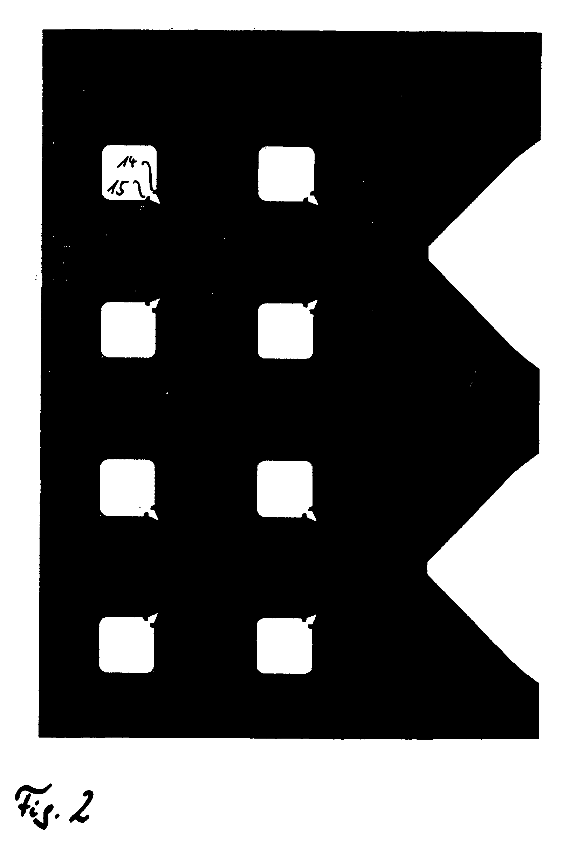

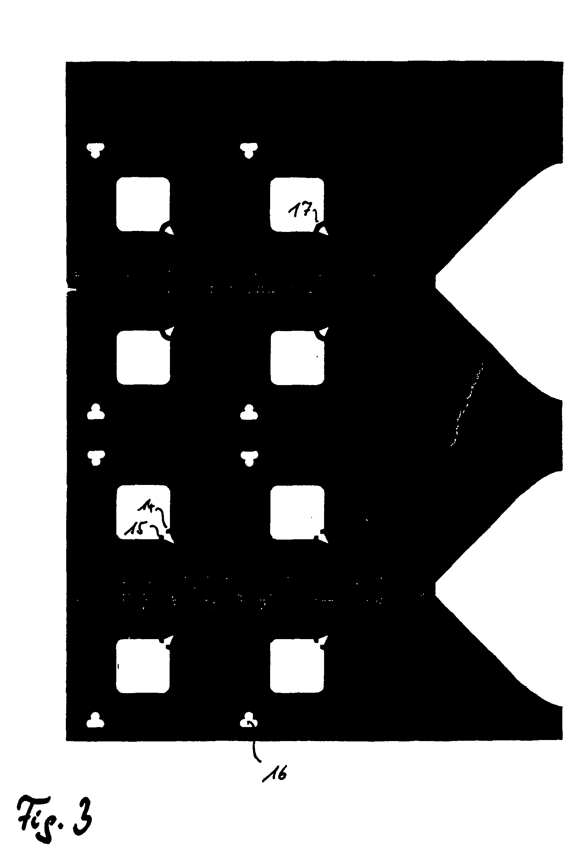

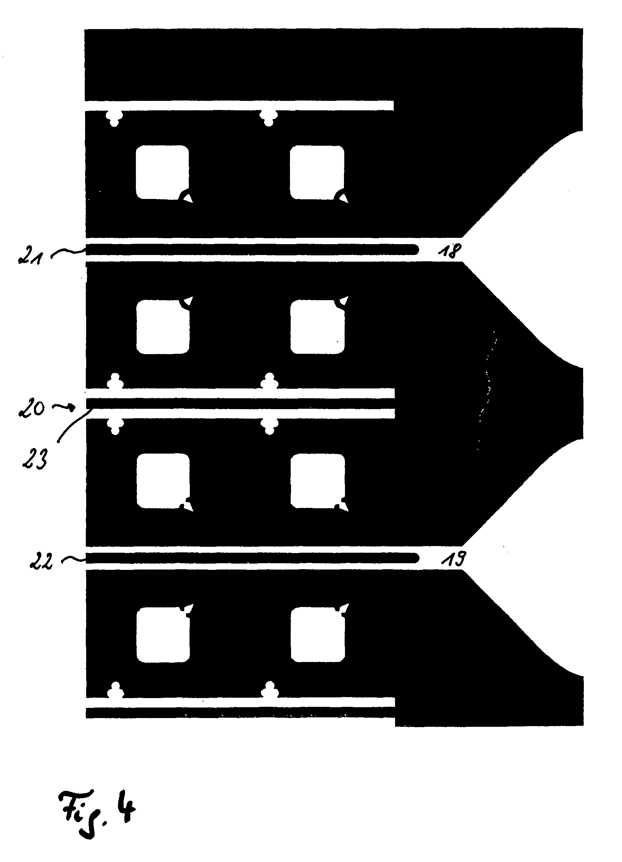

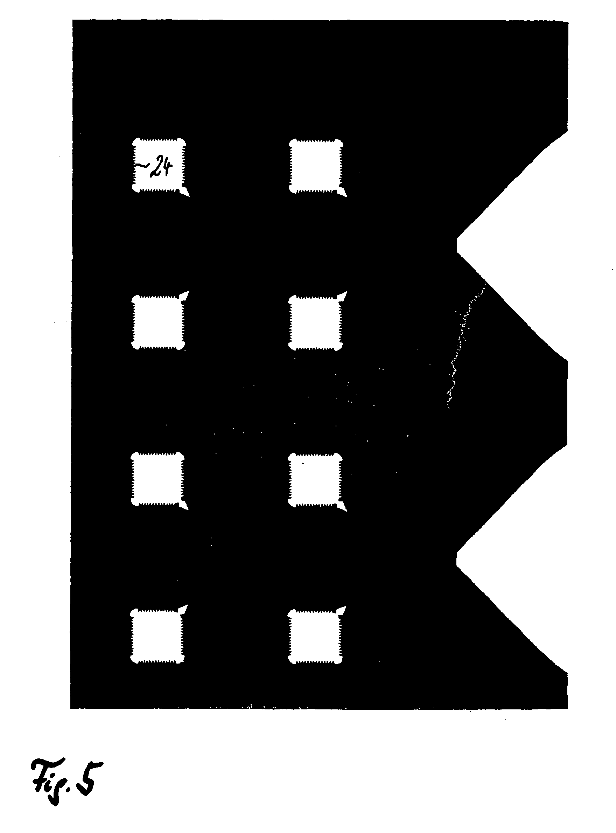

Die Masken 3 und 4 sind in den Figuren 2 und 3 ohne strukturierte Seitenwände der Reaktionskammern dargestellt. Die Figur 5 und das in Figur 6 gezeigte Detail zeigen, wie die Wände der Reaktionskammern mit einer Zickzackstruktur 24 versehen werden können, deren Kanten sich senkrecht erstrecken.

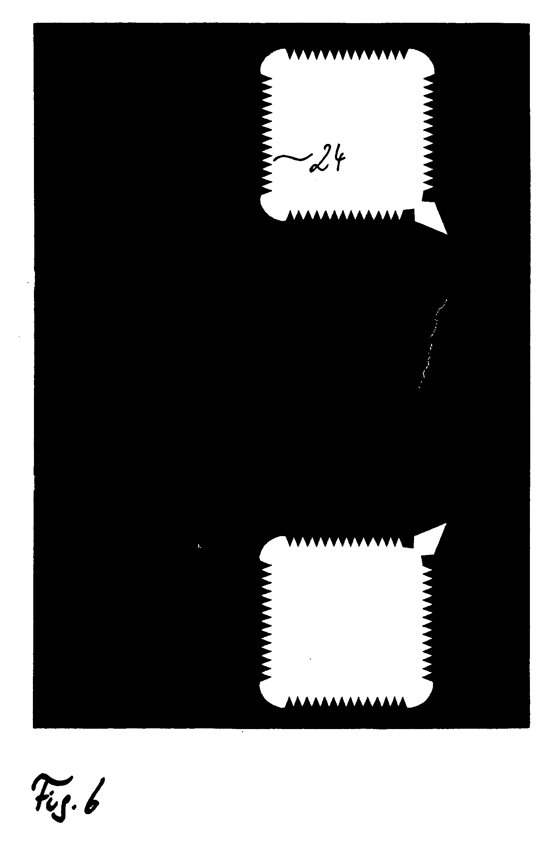

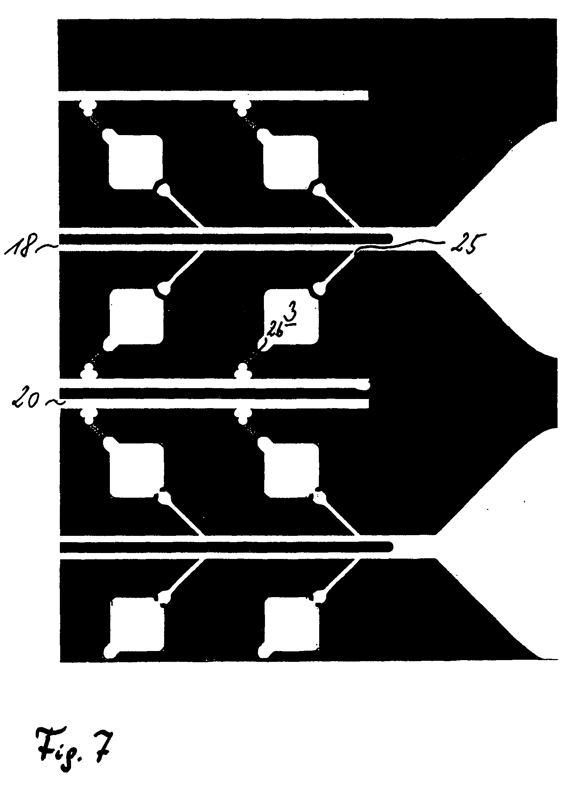

Oberhalb der in Figur 4 beschriebenen Maske 5 wird mit der in Figur 7 gezeigten Maske 6 weitergearbeitet. In dieser Maske sind bereits Verteilerkanäle 25 zwischen den Reaktionskammern 3 und dem Zulaufkanal 18 zu erkennen. Außerdem sieht man bereits leicht grau hinterlegt von der Kammer 3 zum Entlüftungskanal 20 führende Entlüftungsleitungen 26. Der Zulaufkanal 18 ist auf der linken, geschnittenen Seite geschlossen und der Entlüftungskanal 20 ist auf der linken, geschnittenen Seite offen.

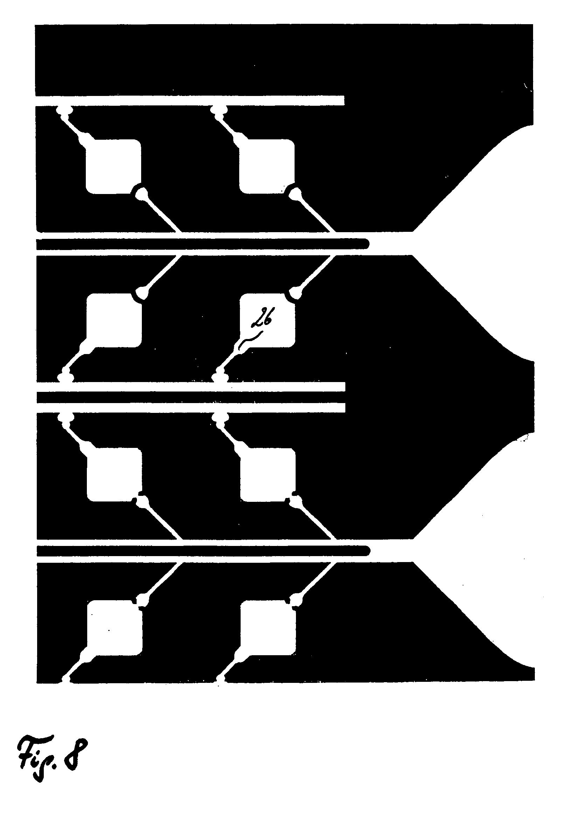

In der darüber liegenden Ebene sind nun in der mit der Maske 7 hergestellten und in Figur 8 gezeigten Schicht alle Kanäle deutlich zu erkennen. Auch die Entlüftungsleitungen 26 sind nun weiß dargestellt und somit in dieser Ebene voll durchlässig.

## Patentansprüche

1. Probenträger mit einer Reaktionskammer, ***dadurch gekennzeichnet*, *dass*** die Reaktionskammer einen spiegelnden Boden aufweist.

2. Probenträger mit einer Reaktionskammer, ***dadurch gekennzeichnet, dass*** die Reaktionskammer einen durchsichtigen Boden aufweist, der von einem zumindest für bestimmte Wellenlängen undurchsichtigen Rahmen umgeben ist.

3. Probenträger mit einer Reaktionskammer, ***dadurch gekennzeichnet, dass*** er einen zur Reaktionskammer führenden Flüssigkeitskanal aufweist und die an den Flüssigkeitskanal angrenzenden Seitenwände der Reaktionskammer einen spitzen Winkel bilden.

4. Probenträger nach Anspruch 3, ***dadurch gekennzeichnet, dass*** die an den Flüssigkeitskanal angrenzenden Wände vorzugsweise vom Boden der Reaktionskammer beabstandet vorstehende Elemente aufweisen, die einen von den Wänden gebildeten Kanal einschnüren.

5. Probenträger nach Anspruch 4, ***dadurch gekennzeichnet, dass*** sich die vorstehenden Elemente vom Boden der Reaktionskammer beabstandet berühren und einen geschlossenen Kanal bilden.

6. Probenträger nach Anspruch 3, ***dadurch gekennzeichnet, dass*** die übrigen Seitenwände in abgerundeten Ecken aufeinander stoßen.

7. Probenträger mit einer Reaktionskammer, ***dadurch gekennzeichnet, dass*** die Reaktionskammer Wände aufweist, die eine Zickzackstruktur aufweisen, deren Kanten sich senkrecht erstrecken.

8. Probenträger nach Anspruch 7, ***dadurch gekennzeichnet, dass*** die Zickzackstruktur sich nur über einen Teil der Höhe der Seitenwände erstreckt.

9. Probenträger mit einer Reaktionskammer, ***dadurch gekennzeichnet, dass*** er weitere Reaktionskammern, einen Zulaufkanal und vom Zulaufkanal zu den Reaktionskammern führende Verteilerkanäle aufweist, wobei der Zulaufkanal mindestens eine Längsteilung aufweist oder jede Reaktionskammer einen eigenen Zulaufkanal aufweist.

10. Probenträger mit einer Reaktionskammer, ***dadurch gekennzeichnet, dass*** er weitere Reaktionskammern, einen Entlüftungskanal und von den Reaktionskammern zum Entlüftungskanal führende Entlüftungsleitungen aufweist, wobei der Entlüftungskanal mindestens eine Längsteilung aufweist oder jede Reaktionskammer einen eigenen Entlüftungskanal aufweist.

11. Probenträger mit einer Reaktionskammer, ***dadurch gekennzeichnet, dass*** die Reaktionskammer einen Deckel mit Löchern aufweist.

12. Probenträger nach Anspruch 11, ***dadurch gekennzeichnet, dass*** der Deckel eine zur Reaktionskammer weisende hydrophobe Oberfläche aufweist.

13. Probenträger nach Anspruch 11, ***dadurch gekennzeichnet, dass*** der Deckel eine von der Reaktionskammer weg weisende verspiegelte Oberfläche aufweist.

14. Probenträger mit einer Reaktionskammer, ***dadurch gekennzeichnet, dass*** obere Bereiche senkrechter Wandungen, insbesondere von Entlüftungskanälen oder Kammern, hydrophob ausgebildet sind.

15. Probenträger mit einer Reaktionskammer, ***dadurch gekennzeichnet, dass*** mindestens eine Reaktionskammer und ein Gasraum in einem Chip integriert sind und miteinander in Verbindung stehen.

16. Probenträger nach Anspruch 15, ***dadurch gekennzeichnet, dass*** der Gasraum hydrophobe Wände aufweist.

17. Probenträger nach Anspruch 15, ***dadurch gekennzeichnet, dass*** der Gasraum Wasser und ein Gas enthält.

18. Probenträger nach Anspruch 15, ***dadurch gekennzeichnet, dass*** der Gasraum mit einer Gaszufuhr in Verbindung steht.

19. Probenträger nach Anspruch 15, ***dadurch gekennzeichnet, dass*** im Chip ein Luftzirkulationsweg integriert ist, der durch mindestens eine Reaktionskammer und vorzugsweise mindestens einen Gasraum führt.

20. Probenträger mit einer Reaktionskammer, ***dadurch gekennzeichnet, dass*** er Kanäle aufweist, die sich vorzugsweise mehrmals nacheinander verzweigen, wobei der Kanalquerschnitt sich entsprechend der Verzweigung reduziert.
